# EUROPEAN PATENT APPLICATION

(11) **EP 2 048 610 A1**
(43) Date of publication of application: **15.04.2009**
(21) Application number: 07118070.7
(22) Date of filing: 08.10.2007
(51) Int. Cl.: G06Q 30/00

(54) **Method for interaction with a display unit**

(71) Applicant: Digitopia, 2970 Schilde (BE)
(72) Inventor: BUSSELS, Jan, 2970, SCHILDE (BE); DECONINCK, Luc, 8500, KORTRIJK (BE)
(74) Representative: Quintelier, Claude

(57) **Abstract**

A method for establishing and performing an interaction between a display unit and a portable communication device carried by a passer-by of said display unit, **characterised in that** said display unit cooperates with an interface having local networking means, said method comprising the steps of:
■ displaying on said display unit information which comprises connection data and a set of interaction instructions;
■ reading said connection data and at least a subset of said set of interaction instructions by said passer-by;
■ establishing by said passer-by a local connection between said portable communication device and said interface using said connection data;
■ creating processing data by following said subset of interaction instructions on said portable communication device by said passer-by;
■ sending said processing data from said portable communication device to said interface by said passer-by;
■ processing said processing data by said interface using execution data which is stored in said interface.

## Description

The present invention relates to a method for establishing and performing an interaction between a display unit and a portable communication device carried by a passer-by of said display unit.

Display units, like for example billboards, are widely used especially in advertising. In many cases however, it is wanted to interact with a passer-by. An example of such an interaction is giving some information along with the passer-by. This is often done by lying brochures next to the display unit. If a passer-by is interested in what the display unit shows, he or she can take a corresponding brochure.

This way of working has several disadvantages. At first, the brochures are quite expensive to create and manufacture. They also have to be placed at every display unit where this is wanted and filling up is often needed. Another disadvantage is that they can't be taken by for example passing drivers. Furthermore, they can be destroyed by passer-by's or by weather conditions such as rain. And last but not least, it is hard, regarding all these disadvantages, to obtain reliable statistics on the impact they had on the passer-bys.

In the prior art there are methods known which eliminate most of these disadvantages. Some display units show messages like for example "SMS to **** to receive ...". This is another way of interacting with a passer-by which carries a portable networking device. These display units give the passer-by of the display unit the possibility to interact using their portable networking device. They can for example receive information corresponding to the display unit messages. Passing drivers are thus in the ability to interact. Because there is no brochure any more in this way of working, the disadvantages of the brochures are no longer present. Reliable statistics can be obtained with this method.

A disadvantage however of the latter method is that it uses a public network where the user has to pay for his communication. This adversely affects the interest of a passer-by because he or she is the one who has to pay, before he or she even knows if the offered interaction is valuable to him or her.

In another way of working, an interface having local networking means automatically detects a passer-by carrying a portable communication device, and sends information to this device. In this method, the display unit doesn't play an active part. That results in that the passer-by doesn't take the initiative to interact. This way of working creates data pollution on the networks and devices. This data can be experienced as spam.

It is an object of the present invention to propose a method for establishing and performing an interaction between a display unit and a passer-by of said display unit, which passer-by carries a portable communication device, which method allows the passer-by, on his own initiative, to interact with the display unit using his portable communication device, without having to pay for the communication.

For this purpose, the method according to the invention is characterised in that said display unit cooperates with an interface having local networking means, said method comprising the steps of:
■ displaying on said display unit information which comprises connection data and a set of interaction instructions;
■ reading said connection data and at least a subset of said set of interaction instructions by said passer-by;
■ establishing by said passer-by a local connection between said portable communication device and said interface using said connection data;
■ creating processing data by following said subset of interaction instructions on said portable communication device by said passer-by;
■ sending said processing data from said portable communication device to said interface by said passer-by;
■ processing said processing data by said interface using execution data which is stored in said interface.

In this method, the display unit cooperates with an interface having local networking means. This allows performing an interaction in a local network in stead of a general network where one has to pay. Therefore the passer-by doesn't have to pay for performing the interaction. The display unit shows the required information for establishing a local connection, and shows a set of interaction instructions. On the basis of the shown information, the passer-by can decide whether he or she wants to perform an interaction using his or her portable communication device. If so, he or she can, using the displayed information, establish the local connection, which is for example a Bluetooth connection. When the local connection is established, he or she can perform the interaction, based on the interaction instructions shown by the display unit. Because the passer-by establishes the connection and performs the interaction only on the basis of visual instructions, interaction can only be performed on his own initiative. This also results in the possibility to obtain reliable statistics since every interaction is on the initiative of a passer-by.

In one embodiment, said interface is provided for narrowcasting, said processing data is processed by sending said processing data to a narrowcasting network. Narrowcasting allows advertising and other information to be delivered to narrow demographic groups at specific times in public venues. Examples of narrowcasting in public spaces include delivering pricing and promotional messages to shoppers in department stores or supermarkets, beaming appropriate advertising and news to commuters at airports, in train stations, on busses, or in elevators, or highlighting special offers to customers at retail settings. Combining this known narrowcasting technology with said interface allows not only to deliver specific information at specific times in public venues, but also to perform specific interactions at specific times in public venues.

The invention will now be described in more details with respect to the drawings illustrating some preferred embodiments of the method according to the present invention. In the drawings:
figure 1 illustrates a set up in which the method is applied; and
figure 2 illustrates schematically a method according to the present invention.

In the drawings a same reference number has been allocated to a same or analogous element.

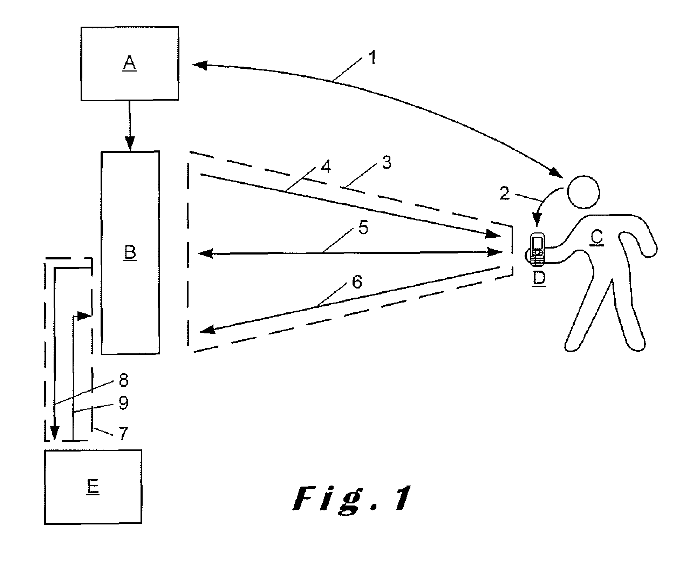

Figure 1 shows a display unit A, which cooperates with an interface B having local networking means, such as for example Bluetooth (registered trademark). A passer-by C of the display unit A carries a portable communication device D, for example a mobile phone having Bluetooth. The display unit A can be a billboard, an advertising poster, an electronic display unit or any display unit used to show information to passer-bys. Preferably interface B is connected to a narrowcasting network E. The displayed information can be of any kind such as advertising, news and pricings.

The information shown on the display unit 1 can be read by the passer-by, who can upon reading this information decide to establish a connection with the interface B. In the first step of the method according to the invention, the display unit A shows the required information, which at least implies that it shows the connection data and a set of interaction instructions. The connection data is provided for enabling the passer-by C to establish a local connection between his portable communication device D and the interface 8. This can be an access code, for example 4431, of a Bluetooth interface. The set of interaction instructions have a double function. At first, they inform the passer-by C on what possibilities there are, for example what he or she can download, or which information he or she can receive. At second, they provide the passer-by C instructions for performing the interaction. An interaction instruction can be for example "download a movie clip named MX about a new car". In this example, the instruction is to download a movie clip, the name of the file is given, namely "MX" and some information about the file is given, namely about a new car.

In a second step, the passer-by C reads at least a part of the information on the display unit, which at least implies that he or she reads the connection data and a subset of the set of interaction instructions. This subset of instructions comprises those instructions from the set of interaction instructions on the display unit in which he or she is interested in. For example if the display unit shows "download the pricing" and "download the list of options", and the passer-by is only interested in the pricing, the subset is "download the pricing". This step is illustrated by arrow 1 in the figure 1,

If a passer-by is interested in the information on the display unit, and decides to perform the proposed interaction, a next step will be performed. If so, he or she can establish a local connection between the portable communication device D and the interface B. Therefore he or she uses the connection data shown on the display unit, which is illustrated by arrow 2. This connection data can be for example a username and a password. By establishing the local connection, a platform 3 is created upon which an interaction can take place.

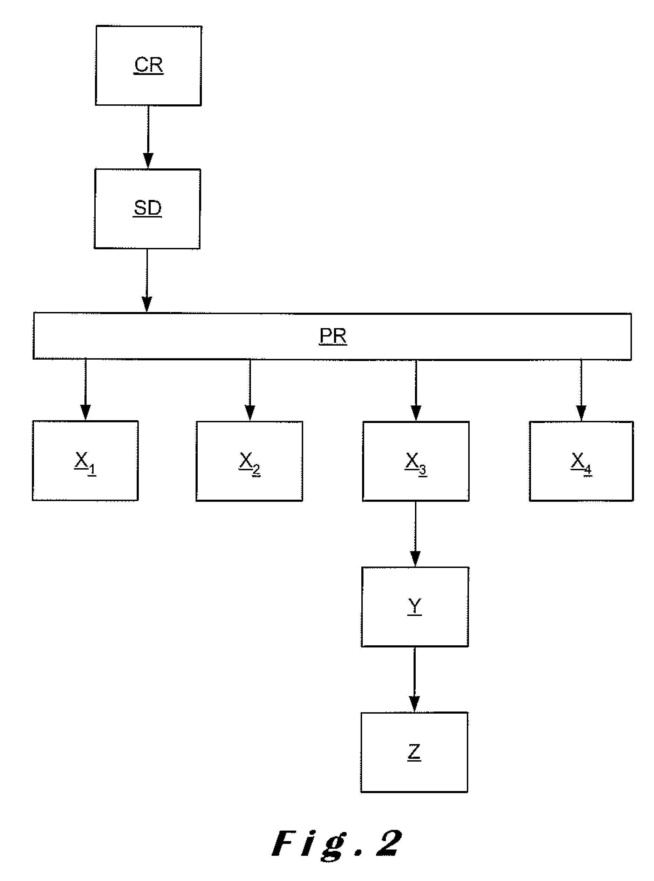

Figure 2 shows the steps after a local connection 3 has been established between the portable communication device D and the interface B. At first, processing data has to be created (CR) by the passer-by C. To that purpose, he of she follows the subset of interaction instructions by means of the portable communication device D. This processing data can be for example a signal corresponding to one option of an option list provided by the interface B, or a four digit code which is shown by the display. After the processing data is generated, this data has to be send (SD) to the interface B. This is illustrated in figure 1 by arrow 6. The processing data shown by the display unit A corresponds with the execution data which is stored in the interface B. Therefore the interface B can, upon receipt of the processing data, process (PR) the corresponding execution data.

As illustrated in figure 2, there are in the illustrated embodiment four different process actions. The processing of the processing data will include one of the four actions, or a combination of at least two of the four actions. The first action X1 comprises the transfer of public data, which is related to the displayed info, from the interface B to the portable communication device D. The second action X2 comprises the transfer of private data, which is related to the passer-by, from the portable communication device D to the interface B. The third action X3 comprises sending processing data and/or personal data to a narrowcasting network. The fourth action X4 comprises displaying a further set of interaction instructions. It is up to the manager of a display unit to decide which interactions between a passer-by and the display unit are authorized, and so which actions are available to be performed.

The first action X1, transferring public data, which is related to the displayed info, from the interface B to the portable communication device D, becomes available to a passer-by if the manager of the display unit wants to give public data along. This public data is for example information about a certain product, a picture, a movie clip or any type of data. If this first action X1 is available, it will be performed if the passer-by sends (SD) the processing data which corresponds to this first action X1.

The second action X2, transferring private data, which is related to the passer-by, from the portable communication device D to the interface B, becomes available to a passer-by if the manager of the display unit wants to receive some data from the passer-by. This private data is for example the address and/or phone number of the passer-by, or an answer on a certain question, or any type of data the passer-by might give to the interface. If this second action X2 is available, it will be performed if the passer-by sends (SD) the processing data which corresponds to this second action X2.

The third action X3, sending 8 processing data and/or personal data to a narrowcasting network E, becomes available to a passer-by if the manager of the display unit wants to gather data in a network. This is possible when the interface B is connected 7 to a narrowcasting network E. This action gives a network manager more insight in the interests of the passer-bys. The sent information can be the processing data, which allows the network manager to have more insight in the interests of the passer-bys. If the sent information is personal data, the network manager can use this data for statistical or commercial purposes. The sent information can also be a combination of processing data and personal data. If this third action X3 is available, it will be performed if the passer-by sends (SD) the processing data which corresponds to this third action X3.

An additional step for this third action X3 comprises receiving Y update data from the narrowcasting network E by the interface B. This is illustrated in figure 1 by arrow 9. In case the display unit is an electronic display unit, this update data can be used to update Z the set of interaction instructions on the display unit A and the execution data in the interface B. By adding this step, the network manager is much more in the ability to adapt the information on the display unit A and to adapt the available interactions between the passer-bys C and the interface B to the interests of the passer-bys C.

The fourth action X4, displaying a further set of interaction instructions, can only be performed in case the display unit is an electronic display unit, and becomes available to a passer-by if the manager of the display unit wants to let a passer-by navigate trough some predetermined options. This action allows to make much more information available to the passer-by for the information doesn't have to fit all together on one display unit any more. For example in a first screen, the set of interaction instructions show a list of products, in which a passer-by can choose. Once chosen, the set of interaction instructions changes to specific information about the chosen product which can be downloaded. If this fourth action X4 is available, it will be performed if the passer-by sends (SD) the processing data which corresponds to this fourth action X4.

## Claims

1. A method for establishing and performing an interaction between a display unit and a portable communication device carried by a passer-by of said display unit, **characterised in that** said display unit cooperates with an interface having local networking means, said method comprising the steps of:
■ displaying on said display unit information which comprises connection data and a set of interaction instructions;
■ reading said connection data and at least a subset of said set of interaction instructions by said passer-by;
■ establishing by said passer-by a local connection between said portable communication device and said interface using said connection data;
■ creating processing data by following said subset of interaction instructions on said portable communication device by said passer-by;
■ sending said processing data from said portable communication device to said interface by said passer-by;
■ processing said processing data by said interface using execution data which is stored in said interface.

2. The method as claimed in claim 1, **characterised in that** said processing data is processed by transferring public data, which is related to the displayed information, from said interface to said portable communication device.

3. The method as claimed in claim 1 or 2, **characterised in that** said processing data is processed by transferring personal data, which is related to said passer-by, from said portable communication device to said interface.

4. The method as claimed in anyone of the claims 1 to 3, **characterised in that** said interface is provided for narrowcasting, said processing data is processed by sending said processing data to a narrowcasting network.

5. The method as claimed in claim 3, **characterised in that** said interface is provided for narrowcasting, said processing data is processed by sending said personal data to a narrowcasting network.

6. The method as claimed in claim 4 or 5, **characterised in that** the method further comprises receiving update data from said narrowcasting network by said interface.

7. The method as claimed in claim 6, **characterised in that** said display unit is an electronic display unit controlled by said interface, the method further comprises displaying a further set of interaction instructions and storing further execution data by using said new data.

8. The method as claimed in anyone of the claims 1 to 5, **characterised in that** said display unit is an electronic display unit controlled by said interface, said processing data is processed by displaying a further set of interaction instructions.
